(19) Europäisches Patentamt
European Patent Office
Office européen des brevets

(11) **EP 3 870 864 B1**

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **20824155.4**

(22) Anmeldetag: **08.12.2020**

(51) Internationale Patentklassifikation (IPC):
*F16B 5/06* (2006.01)     *F16B 5/12* (2006.01)
*F16B 7/04* (2006.01)     *F16B 7/18* (2006.01)

(52) Gemeinsame Patentklassifikation (CPC):
**F16B 5/0642; F16B 5/0664; F16B 5/0685;**
**F16B 5/126; F16B 5/128; F16B 7/0473;**
F16B 7/0413; F16B 7/187

(86) Internationale Anmeldenummer:
**PCT/EP2020/085057**

(87) Internationale Veröffentlichungsnummer:
**WO 2021/116096 (17.06.2021 Gazette 2021/24)**

(54) **VERBINDUNGSANORDNUNG**

CONNECTION ASSEMBLY

ENSEMBLE DE RACCORDEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2019 DE 102019133589**

(43) Veröffentlichungstag der Anmeldung:
**01.09.2021 Patentblatt 2021/35**

(73) Patentinhaber: **Elkamet Kunststofftechnik GmbH**
**35216 Biedenkopf (DE)**

(72) Erfinder:
• **SCHOCH, Andreas**
**35037 Marburg (DE)**
• **RÜHL, Jürgen**
**61203 Reichelsheim (DE)**
• **SCHNEIDER, Marcus**
**35232 Dautphetal (DE)**
• **LANDECK, David**
**57319 Bad Berleburg (DE)**
• **ORTMÜLLER, Michael**
**35232 Dautphetal-Herzhausen (DE)**

(74) Vertreter: **DREISS Patentanwälte PartG mbB**
**Friedrichstraße 6**
**70174 Stuttgart (DE)**

(56) Entgegenhaltungen:
**EP-A1- 3 103 665     WO-A1-2015/033202**

**Beschreibung**

Aus der EP 3 103 665 A1 ist eine Verbindungsanordnung mit den Merkmalen des Oberbegriffs des Patentanspruchs 1 bekannt.

Die Erfindung betrifft eine Verbindungsanordnung mit den Merkmalen des Patentanspruchs 1.

Die Verbindungsanordnung eignet sich vorzugsweise für Bauteile in Form von Langkörpern, insbesondere für Profile, Leisten, Latten oder Paneele.

Die Verbindungsanordnung eignet sich in besonderer Weise auch für Langkörper in Form von Konstruktionsprofilen (beispielsweise sogenannte "ITEM"-Profile der item Industrietechnik GmbH, Solingen, Deutschland, oder sogenannte "BOSCH"-Profile der Bosch Rexroth AG, Lohr am Main, Deutschland).

Vorteilhafte Ausgestaltungen sind in den Unteransprüchen und in der nachfolgenden Beschreibung bevorzugter Ausführungsformen angegeben.

Erfindungsgemäß werden zwei Bewegungswege vorgehalten, entlang welcher sich die Rastbereiche der beiden Rastelemente bewegen können, wobei der jeweilige Bewegungsweg zumindest eine zu der Relativbewegungsachse parallele Komponente aufweist. Ausgehend von einem jeweils unverformten Ruhezustand der Rastelemente sind deren jeweilige Rastbereiche in zwei zueinander entgegengesetzten Richtungen bewegbar. Dabei beziehen sich die Begriffe "Demontagerichtung" und "Montagerichtung" auf eine Bewegung des zweiten Bauteils relativ zu dem ersten Bauteil bei unterstellt unbewegtem ersten Bauteil. Zumindest der erste Teil des jeweiligen Bewegungswegs eines Rastbereichs jedes der Rastelemente - der bezogen auf den Ruhezustand in die Demontagerichtung weist - ist durch jeweils eine Anschlagfläche begrenzt, an welcher sich jeweils ein Rastelement im Zuge der Demontage der Bauteile abstützt.

Die beiden Anschlagflächen sind durch zwei von einander getrennte, auf voneinander abgewandten Seiten der Relativbewegungsebene angeordnete Abschnitte des ersten Bauteils gebildet. Die Anschlagflächen erstrecken sich in vorteilhafter Weise quer, vorzugsweise senkrecht, zu der Relativbewegungsebene.

Dadurch, dass die genannten Bewegungsmöglichkeiten der Rastbereiche der beiden Rastelemente vorgehalten werden, sind die Montagekräfte, die zum Fügen der Verbindunganordnung aufgebracht werden müssen, vergleichsweise klein. Das Vorhalten der Anschlagflächen ermöglicht es dabei, die Demontage der Verbindungsanordnung so zu erschweren, dass im Montagezustand der Verbindungsanordnung hohe Haltekräfte wirken. Zum Lösen der Verbindunganordnung müssen daher vergleichsweise hohe Demontagekräfte aufgebracht werden.

Es ist vorteilhaft, wenn die Länge des ersten Teils des Bewegungswegs eines Rastbereichs von der Länge des zweiten Teils des Bewegungswegs dieses Rastbereichs abweicht, sodass durch die Länge der jeweiligen Bewegungswege unterschiedliche Montage- und Demontagekräfte vorgebbar sind. Besonders bevorzugt ist es, wenn die Länge des ersten Teils des Bewegungswegs kürzer ist als die Länge des zweiten Teils des Bewegungswegs, was insbesondere damit einhergeht, dass die Demontagekräfte zum Lösen der Verbindungsanordnung höher sind als die Montagekräfte zum Fügen der Verbindungsanordnung.

In vorteilhafter Weise sind die Rastelemente insgesamt oder zumindest in einem Teilbereich federelastisch. Es ist bevorzugt, dass die Rastelemente zumindest abschnittsweise aus einem federelastischen Material hergestellt sind, beispielsweise aus einem thermoplastischen Elastomer. Die Rastelemente können aber auch aus anderen Kunststoffmaterialien oder auch aus metallischen Werkstoffen hergestellt sein.

Es ist ferner bevorzugt, wenn sich die Rastelemente bezogen auf die Relativbewegungsebene in ihrem Ruhezustand jeweils entlang einer Ebene erstrecken, die schräg oder senkrecht zu der Relativbewegungsebene verläuft. Durch diese Orientierung kann das Verhältnis zwischen Montage- und Demontagekraft gegebenenfalls zusätzlich beeinflusst werden.

Bevorzugt ist es ferner, wenn sich die Rastelemente in einer zu der Relativbewegungsebene senkrechten Querschnittsebene gesehen jeweils zwischen einem Befestigungsabschnitt und einem freien Ende erstrecken, wobei der jeweilige Befestigungsabschnitt mit dem ersten Bauteil verbunden ist und wobei das jeweilige freie Ende relativ zu dem jeweiligen Befestigungsabschnitt entlang oder parallel zu dem jeweiligen Bewegungsweg verschwenkbar ist. Dies ermöglicht eine stabile Befestigung der Rastelemente an dem ersten Bauteil.

Es ist bevorzugt, dass ein mit einer Rastaufnahme des zweiten Bauteils zusammenwirkender Rastbereich eines Rastelements im Bereich des freien Endes des Rastelements oder hierzu angrenzend angeordnet ist.

Für eine vorstehend beschriebene Querschnittsform der Rastelemente kann ein mit dem jeweils ersten Teil des jeweiligen Bewegungswegs korrespondierender erster Schwenkwinkel minimal circa 5° betragen und/oder maximal circa 100° betragen. Mit den genannten Winkelbereichen können hohe Haltekräfte mit moderaten Demontagekräften kombiniert werden.

Es wird ferner vorgeschlagen, dass ein mit dem jeweiligen zweiten Teil des jeweiligen Bewegungswegs korrespondierender zweiter Schwenkwinkel minimal circa 10° beträgt. Auf diese Weise können vergleichsweise niedrige Montagekräfte eingestellt werden.

In vorteilhafter Weise sind die Rastelementaufnahmen durch jeweilige Materialvorsprünge des zweiten Bauteils gebildet, die jeweils einen Hinterschnitt zur Aufnahme jeweils eines Rastbereichs jeweils eines Rastelements aufweisen.

In vorteilhafter Weise sind die Rastelemente der Verbindungsanordnung zu der Relativbewegungsebene schnittpunktfrei ausgerichtet und jeweils ausschließlich auf einer der beiden Seiten der Relativbewegungsebene angeordnet. Die Verbindungsanordnung weist also kein Rastelement auf, das sich durch die Relativbewegungsebene hindurch erstreckt.

Gemäß Unteranspruch 5 ist zumindest eines der Bauteile in Form eines Konstruktionsprofils ausgebildet, insbesondere in Form eines ITEM-Profils oder eines Bosch-Profils.

Ausgestaltungen betreffen bevorzugte Geometrien und Herstellverfahren der Bauteile, wobei bspw.

- die Längserstreckungsachse des ersten Bauteils parallel zu der Relativbewegungsebene verläuft und/oder die Längserstreckungsachse des zweiten Bauteils parallel zu der Relativbewegungsebene (16) verläuft und/oder
- entlang der Längserstreckungsachse des ersten Bauteils zueinander versetzte Querschnitte des ersten Bauteils identisch sind und/oder dass entlang der Längserstreckungsachse des zweiten Bauteils zueinander versetzte Querschnitte des zweiten Bauteils identisch sind und/oder
- das erste Bauteil und/oder das zweite Bauteil durch Ablängen eines Endloskörpers hergestellt ist oder sind, wobei der Endloskörper vorzugsweise mittels Extrusion oder Strangpressen hergestellt ist.

Eine Ausgestaltung gemäß Unteranspruch 7 in Verbindung mit den Merkmalen des Unteranspruchs 6 hat den Vorteil eines erhöhten Demontagewiderstands.

Eine Ausgestaltung gemäß Unteranspruch 8 in Verbindung mit den Merkmalen des Unteranspruchs 6 unterstützt eine einfache Montierbarkeit des ersten Bauteils und des zweiten Bauteils.

Ausgestaltungen gemäß jeweiliger Alternativen des Unteranspruchs 9 betreffen bevorzugte Bauteilkonfigurationen, bei welchen eine im Vergleich zu der Montage erschwerte Demontage besonders vorteilhaft ist.

Eine Ausgestaltung gemäß Unteranspruch 10 hat den Vorteil, dass die Lage der Bauteile relativ zueinander einstellbar ist. Eine solche Einstellbarkeit kann insbesondere genutzt werden, um zwei miteinander verbundene Bauteile zu demontieren (Unteranspruch 11) und/oder um ein Montagespiel zwischen den beiden Bauteilen auszugleichen (Unteranspruch 12).

Eine Ausgestaltung gemäß Unteranspruch 13 trägt zu einer erhöhten Stabilität eines Montagezustands bei.

Eine Ausgestaltung gemäß Unteranspruch 14 eignet sich insbesondere für Langkörper, die als Konstruktionsprofil, beispielsweise als ITEM-Profil oder als Bosch-Profil ausgebildet sind.

Die Erfindung betrifft ferner ein Verbindungssystem, das mindestens zwei vorstehend diskutierte Verbindungsanordnungen umfasst. Dabei ist vorzugsweise (zumindest) ein erstes Bauteil oder (zumindest) ein zweites Bauteil gleichzeitig beiden Verbindungsanordnungen zugeordnet. Ein solches Verbindungssystem ist insbesondere vorteilhaft für Anordnungen mit Bauteilen, welche in einem Eckbereich aneinander anstoßen.

In der Zeichnung zeigt:

| | |
|---|---|
| Fig. 1 | eine perspektivische Ansicht einer ersten Ausführungsform einer Verbindungsanordnung in einem Montagezustand; |
| Fig. 2 | einen Querschnitt der Verbindungsanordnung gemäß Fig. 1 in einem Montagezustand; |
| Fig. 3 | einen der Fig. 2 entsprechenden Querschnitt während einer Demontage; |
| Fig. 4a | eine perspektivische Ansicht einer zweiten Ausführungsform einer Verbindungsanordnung in einem Montagezustand; |
| Fig. 4b | einen Querschnitt der Verbindungsanordnung gemäß Fig. 4a; |
| Fig. 5 | einen Querschnitt der Verbindungsanordnung gemäß Fig. 1; |
| Fig. 6 | eine perspektivische Ansicht einer nicht erfindungsgemäßen dritten Ausführungsform einer Verbindungsanordnung in einem Montagezustand; |
| Fig. 7 | einen Querschnitt der Verbindungsanordnung gemäß Fig. 6 in einem Montagezustand; |
| Fig. 8 | einen der Fig. 7 entsprechenden Querschnitt während einer Demontage; |
| Fig. 9 | einen Querschnitt der Verbindungsanordnung gemäß Fig. 6; |

| | |
|---|---|
| Fig. 10 | eine perspektivische Ansicht einer weiteren Ausführungsform einer Verbindungsanordnung, wobei eines der Bauteile als plattenförmiger Flachkörper ausgebildet ist; |
| Fig. 11 | eine perspektivische Ansicht einer weiteren Ausführungsform einer Verbindungsanordnung, wobei eines der Bauteile als Sockelleiste ausgebildet ist; |
| Fig. 12 | eine perspektivische Ansicht einer Ausführungsform eines Verbindungssystems mit mehreren Verbindungsanordnungen, wobei zumindest eines der Bauteile jeder der Verbindungsanordnungen als Endlosprofil, insbesondere in Form eines Konstruktionsprofils, ausgebildet ist; |
| Fig. 13 | eine perspektivische Ansicht einer nicht erfindungsgemäßen weiteren Ausführungsform einer Verbindungsanordnung, deren Bauteile eine Kettengliederanordnung bilden; |
| Fig. 14a und 14b | perspektivische Ansichten einer weiteren Ausführungsform einer Verbindungsanordnung, welche eine Relativlageneinstelleinrichtung umfasst, in einem Montagezustand und in einer Demontagephase; |
| Fig. 15 | eine perspektivische Ansicht einer nicht erfindungsgemäßen weiteren Ausführungsform einer Verbindungsanordnung, welche ein adapterförmiges Zwischenteil umfasst; |
| Fig. 16a | eine perspektivische Ansicht einer weiteren Ausführungsform einer Verbindungsanordnung, wobei eines der Bauteile als plattenförmiger, elastisch nachgiebiger Flachkörper ausgebildet ist; |
| Fig. 16b | einen Querschnitt der Verbindungsanordnung gemäß Fig. 16a; |
| Fig. 16c | eine der Fig. 16b entsprechende Ansicht einer alternativen Ausführungsform; |
| Fig. 17a | eine perspektivische Ansicht einer Ausführungsform eines Verbindungssystems mit zwei Verbindungsanordnungen; |
| Fig. 17b | eine Explosionsansicht des Verbindungssystems gemäß Fig. 17a; |
| Fig. 17c | einen Querschnitt des Verbindungssystems gemäß Fig. 17a; |
| Fig. 18 bis 21 | Querschnitte weiterer Ausführungsformen von Verbindungssystemen mit zwei Verbindungsanordnungen; |
| Fig. 22a, 22b | perspektivische Ansichten einer weiteren Ausführungsform einer Verbindungsanordnung mit einer Relativlageneinstelleinrichtung; und |
| Fig. 22c, 22d | Querschnitte der Verbindungsanordnung gemäß Fig. 22a, 22b. |

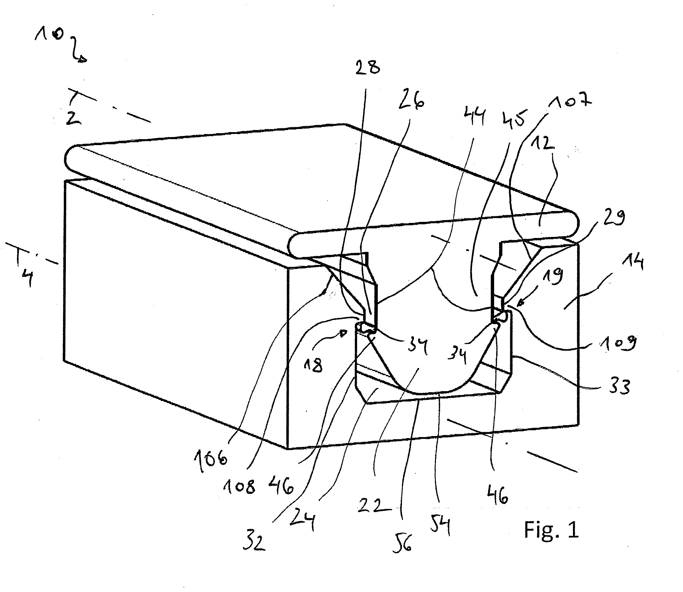

Eine in den Figuren 1 bis 3 dargestellte erste Ausführungsform einer Verbindungsanordnung ist in der Zeichnung insgesamt mit dem Bezugszeichen 10 bezeichnet. Die Verbindungsanordnung 10 umfasst ein erstes Bauteil 12 in Form eines Langkörpers und ein zweites Bauteil 14 in Form eines Langkörpers. Die Bauteile 12, 14 erstrecken sich jeweils entlang einer Längserstreckungsachse 2, 4. Die Längserstreckungsachsen 2 und 4 verlaufen vorzugsweise zueinander parallel.

Das erste Bauteil 12 weist einen sich parallel zu der Längserstreckungsachse 2 erstreckenden Steg 22 auf. Das zweite Bauteil 14 weist eine sich parallel zu der Längserstreckungsachse 4 erstreckende Stegaufnahme 24 auf.

Der Steg 22 erstreckt sich in einem (senkrecht zu der Längserstreckungsachse 2 anliegenden) Querschnitt des ersten Bauteils 12 ausgehend von einem freien Ende 54 bis hin zu zwei Materialvorsprüngen 46, an welche sich jeweils nach innen versetzte Seitenflächen 44 einer Stegbasis 45 anschließen. Im Bereich jeweils eines Übergangs zwischen jeweils einem Materialvorsprung 46 und der Stegbasis 45 ist jeweils ein sich vorzugsweise jeweils parallel zu der Längserstreckungsachse 2 erstreckendes Rastelement 18, 19 angeordnet.

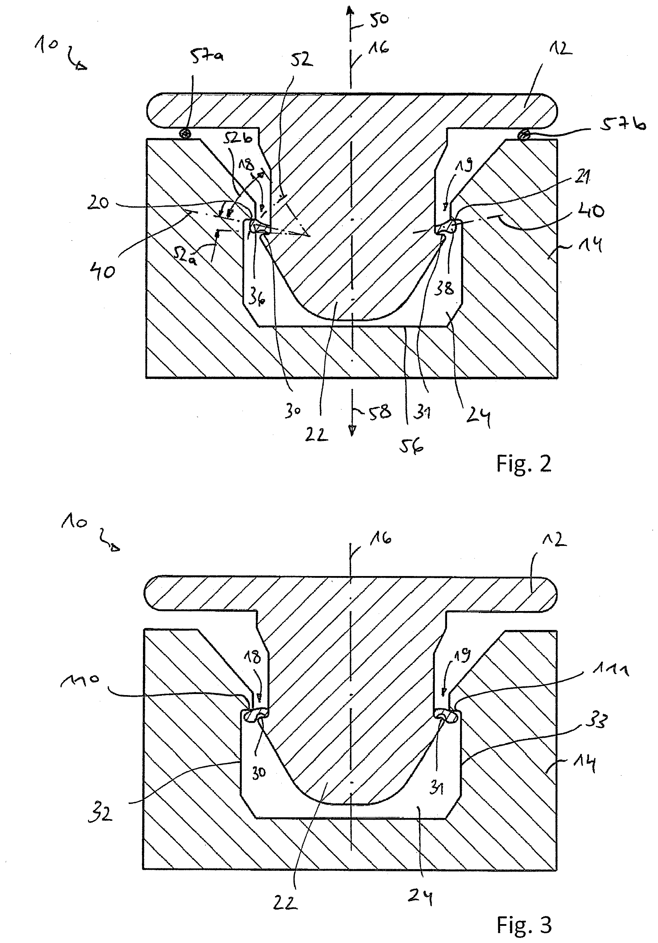

Die Rastelemente 18,19 sind mit jeweils einem Befestigungsabschnitt 34 in den genannten Bereichen des ersten Bauteils 12 festgelegt und erstrecken sich jeweils in einer Ebene 40, vgl. Fig. 2. Die beiden Ebenen 40 können bezogen auf eine Relativbewegungsebene 16 der beiden Bauteile 12 und 14 geneigt angeordnet sein und können bezogen auf die Relativbewegungsebene 16 zueinander spiegelsymmetrisch ausgerichtet sein.

Die Rastelemente 18, 19 weisen bezogen auf ihre Befestigungsabschnitte 34 außen angeordnete Rastbereiche 36, 38 auf.

Die Orientierung der Ebenen 40 bezieht sich auf einen unverformten Ruhezustand der Rastelemente 18, 19. Ausgehend von dem jeweiligen Ruhezustand der Rastelemente 18, 19 sind die Rastbereiche 36, 38 um den jeweiligen Befestigungsabschnitt 34 herum oder relativ zu diesem entlang eines ersten Teils 52a eines Bewegungswegs 52 verschwenkbar, bis hin zu jeweiligen Anschlagflächen 30, 31, die durch jeweils einen der Materialvorsprünge 46 des Stegs 22 gebildet sind. Ferner sind die Rastbereiche 36, 38 ausgehend von ihrem jeweiligen Ruhezustand entlang eines zweiten Teils 52b des Bewegungswegs 52 verschwenkbar, also in Richtung auf die Stegbasis 45.

Das zweite Bauteil 14 weist zwei, vorzugsweise geneigte, Anlaufflächen 106, 107 auf, welche sich parallel zu der Längserstreckungsachse 4 erstrecken und an einem Eingang 26 der Stegaufnahme 24 münden. Der Eingang 26 ist durch zwei einander gegenüberliegende Seitenflächen 28, 29 begrenzt. Die Seitenflächen 28, 29 sind jeweils durch einen sich nach innen erstreckenden Materialvorsprung 108, 109 gebildet, welche auf ihrer der jeweiligen Anlauffläche 106, 107 abgewandten Seite jeweils eine Hinterschnittfläche 110, 111 aufweisen, vgl. Fig. 3. Die Hinterschnittflächen 110, 111 erstrecken sich jeweils ausgehend von einer Seitenfläche 28, 29 nach außen bis hin zu einander gegenüberliegenden Begrenzungsflächen 32, 33 der Stegaufnahme 24. Die Hinterschnittflächen 110, 111 bilden jeweils eine Rastelementaufnahme 20, 21 für jeweils einen Rastbereich 36, 38 eines Rastelements 18, 19.

Ausgehend von einem Demontagezustand der Verbindungsanordnung 10 können das erste Bauteil 12 und das zweite Bauteil 14 miteinander gefügt werden. Dabei bezieht sich eine parallel zu der Relativbewegungsebene 16 gerichtete Montagerichtung 50 auf das zweite Bauteil 14, wobei es natürlich auch möglich ist, dass das zweite Bauteil 14 nicht bewegt wird und nur das erste Bauteil bewegt wird, oder dass beide Teile 12 und 14 aufeinander zu bewegt werden. Dabei ergibt sich aus Sicht des zweiten Bauteils 14 aber immer die in Figur 2 dargestellte Montagerichtung 50, welche sich auf die relative Bewegung des zweiten Bauteils 14 zu dem ersten Bauteil 12 bezieht.

Ausgehend von einem getrennten Demontagezustand hat eine vorstehend erläuterte Bewegung der Bauteile 12 und/oder 14 zur Folge, dass die Rastbereiche 36, 38 der Rastelemente 18, 19 während des Montagevorgangs jeweils an den Anlaufflächen 106, 107 zur Anlage kommen und ausgehend von dem jeweils unverformten Ruhezustand der Rastelemente 18, 19 jeweils entlang des zweiten Teils 52b des Bewegungswegs 52 um ihre jeweiligen Befestigungsabschnitte 34 herum oder relativ zu diesen verschwenkt werden.

In einer folgenden Montagephase ist der Steg 22 so weit in die Stegaufnahme 24 eingeführt, dass die Rastbereiche 36, 38 der Rastelemente 18, 19 nicht mehr mit den Anlaufflächen 106, 107 in Kontakt stehen, sondern entlang ihres zweiten Teils 52b des Bewegungswegs 52 so weit verschwenkt sind, dass sie in den durch die Seitenflächen 28 und 29 begrenzten Eingang 26 der Stegaufnahme 24 eintauchen.

Zum Abschluss des Montagevorgangs ist der Steg 22 so weit in der Stegaufnahme 24 aufgenommen, dass die Rastbereiche 36, 38 der Rastelemente 18, 19 außer Eingriff mit den Seitenflächen 28, 29 der Materialvorsprünge 108, 109 gelangen und in jeweils einer Rastelementaufnahme 20, 21 aufgenommen sind, wobei die Rastelemente 18, 19 vorzugsweise wieder einen unverformten (entspannten) Ruhezustand einnehmen.

In diesem in Fig. 2 dargestellten Montagezustand der Verbindungsanordnung 10 ist es möglich, dass die Rastbereiche 36, 38 jeweils die Hinterschnittflächen 110, 111 berühren oder zu diesen Hinterschnittflächen 110, 111 geringfügig beabstandet sind. Ein solcher Abstand kann beispielsweise durch eine Auflage der Stirnfläche 54 des Stegs 22 auf einer Begrenzungsfläche 56 der Stegaufnahme 24 definiert sein und/oder durch die Anordnung von Dichtbändern 57a, 57b, welche beidseits der Relativbewegungsachse 16 angeordnet sind und dichtend zwischen dem ersten Bauteil 12 und dem zweiten Bauteil 14 wirksam sind, vergleiche Figur 2.

Ausgehend von dem in Figur 2 dargestellten Montagezustand der Verbindungsanordnung 10 erfolgt eine Demontage in einer bezogen auf das zweite Bauteil 14 mit 58 bezeichneten Demontagerichtung. Wie vorstehend erörtert, ist es möglich, dass in dem Montagezustand der Verbindungsanordnung 10 die Rastbereiche 36, 38 jeweils an den Hinterschnittflächen 110, 111 anliegen oder zu den Hinterschnittflächen 110, 111 beabstandet sind. Für den Fall, dass ein solcher Abstand vorgesehen ist, wird dieser Abstand in einer ersten Demontagephase so lange verkleinert, bis die Rastbereiche 36, 38 jeweils an den Hinterschnittflächen 110, 111 zur Anlage kommen. Während dieser Phase verbleiben die Rastelemente 18, 19 in ihrem jeweils unverformten Ruhezustand. Mit Anlage der Rastbereiche 36, 38 an den Hinterschnittflächen 110, 111 bewirkt eine weitere Relativbewegung der Bauteile 12 und 14 längs der Relativbewegungsebene 16, dass sich die Rastbereiche 36, 38 entlang ihres jeweils ersten Teils 52a ihres Bewegungswegs 52 verformen, bis die Rastelemente 18, 19 bzw. Rastbereiche 36, 38 an den durch die Materialvorsprünge 46 gebildeten Anschlagflächen 30, 31 zur Anlage kommen, vgl. Fig. 3.

Eine weitere Bewegung der Bauteile 12 und 14 längs der Relativbewegungsebene 16 über den in Figur 3 dargestellten Zustand hinaus führt dazu, dass die Rastbereiche 36, 38 außer Kontakt mit den Hinterschnittflächen 110, 111 gelangen und anschließend in den Bereich des Eingangs 26 der Stegaufnahme 24 eintauchen und dabei jeweils an bzw. zwischen einer der Seitenflächen 28, 29 und einem der Materialvorsprünge 46 des ersten Bauteils 12 angeordnet sind. Abhängig von den Größenverhältnissen können die Rastbereiche 36, 38 dabei in dem Spalt zwischen jeweils einem Materialvorsprung 46 des Stegs 22 und jeweils einem Materialvorsprung 108, 109 der Stegaufnahme 24 auch vorübergehend verquetscht werden.

Eine weitere Relativbewegung führt dann dazu, dass die Rastbereiche 36, 38 außer Eingriff mit den jeweiligen Seitenflächen 28, 29 gelangen und schließlich auch zu den jeweiligen Anlaufflächen 106, 107 beabstandet sind, sodass die Rastelemente 18, 19 wieder ihren jeweils unverformten Ruhezustand einnehmen können.

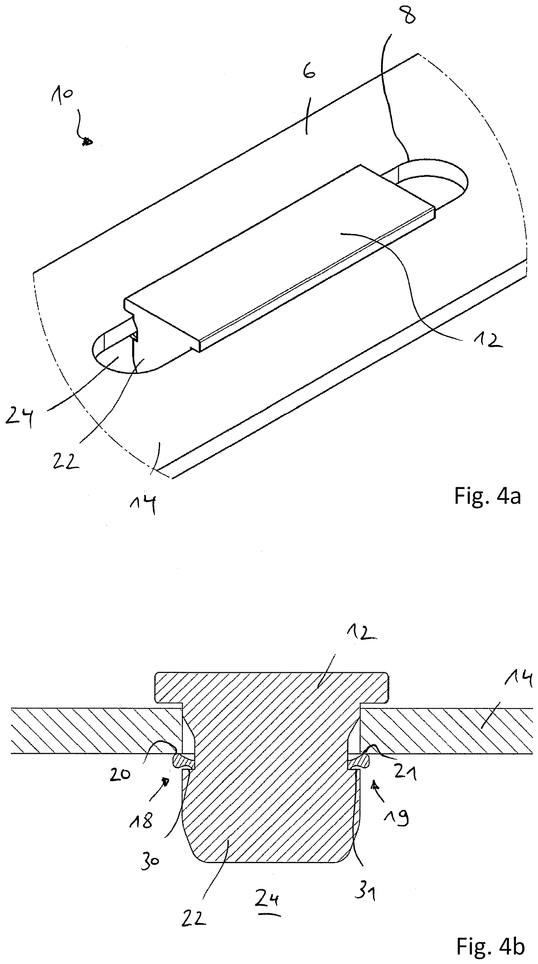

Die in Fig. 4a und 4b dargestellte zweite Ausführungsform hat über die vorstehend beschriebene Ausführungsform die Besonderheit, dass die Stegaufnahme 24 des zweiten Bauteils 14 durch ein Langloch 8 eines Flachkörpers 6 gebildet ist, wobei am Flachkörper 6 selbst vorzugsweise keine weiteren Rastmittel wie Vorsprünge oder Hinterschneidungen vorgesehen sind. Die in Figur 1 bis 3 gezeigten Hinterschnittflächen 110, 110 werden hierbei durch das an das Langloch angrenzende Flachkörpermaterial gebildet. Die Dicke des Flachkörpers 6 und die Länge des Stegs 22 sind derart aufeinander abzustimmen, dass die Rastelemente 18, 19 nach Herstellung der erfindungsgemäßen Verbindung wieder den unverformten Ruhezustand einnehmen können, welcher vorherrscht, bevor beide Bauteile 12, 14 miteinander in Eingriff gebracht werden (Demontagezustand).

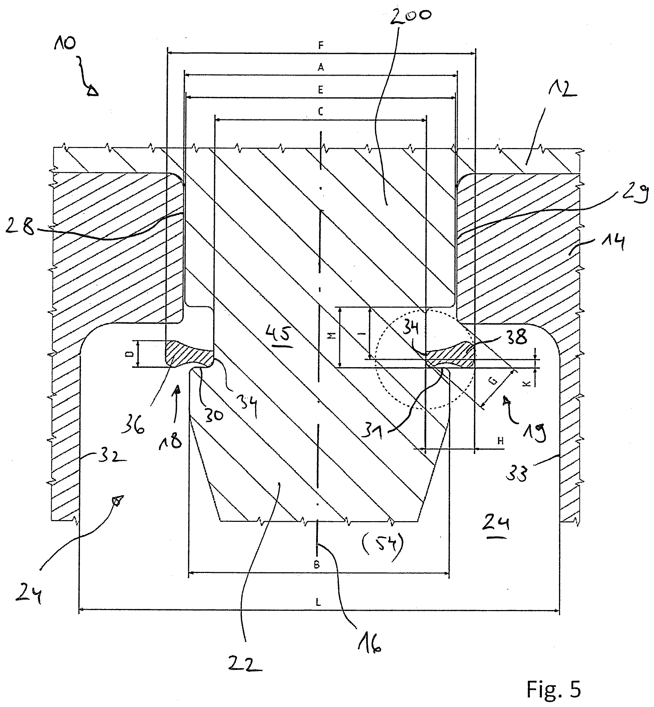

Figur 5 zeigt beispielhaft einige der für eine Verrastung der Bauteile 12 und 14 relevanten Abmessungen. Dabei kennzeichnen die Buchstaben A bis M folgende Abmessungen:

A    = Öffnungsmaß Nut

B    = Stegendabschnitt für Lippenauflage

C    = Stegverjüngung

D    = Lippendicke

E    = Stegbreite

F    = Gesamtmaß

G    = Stegeintauchtiefe

H    = Lippenlänge

I    = Länge der Stegverjüngung für Lippenauflage

K    = Lippenabstand zu Auflagefläche

L    = Nutbreite

M    = Gesamtlänge der Stegverjüngung

Das oben erwähnte Öffnungsmaß der Nut repräsentiert in den gezeigten Beispielen das Öffnungsmaß des Eingangs 26 der Stegaufnahme 24, also eine senkrecht zu der Relativbewegungsebene 16 gemessene Eingangsbreite A des zwischen den Seitenflächen 28 und 29 begrenzten Eingangs 26 (vgl. Fig. 1).

Das oben erwähnte Maß B "Stegendabschnitt für Lippenauflage" entspricht einer senkrecht zu der Relativbewegungsebene 16 gemessenen maximalen Kopfbreite des Stegs 22.

Das oben erwähnte Maß C "Stegverjüngung" entspricht einer senkrecht zu der Relativbewegungsebene 16 gemessenen Breite der Stegbasis 45 des Stegs 22 auf Höhe der beiden Befestigungsabschnitte 34.

Das oben erwähnte Maß D "Lippendicke" entspricht einer parallel zu der Relativbewegungsebene 16 - und in dem unverformten Ruhezustand - gemessenen Dicke eines Rastbereichs 36, 38 eines Rastelements 18, 19.

Das oben erwähnte Maß E "Stegbreite" entspricht einem senkrecht zu der Relativbewegungsebene 16 gemessenen Abstand zwischen voneinander abgewandten Außenflächen einer Erweiterung 200 der Stegbasis 45 des Stegs 22.

Das oben erwähnte Maß F "Gesamtmaß" entspricht einer senkrecht zu der Relativbewegungsebene 16 gemessenen Abstand zwischen jeweiligen Stirnflächen der Rastbereiche 36 und 38 der Rastelemente 18 und 19.

Das oben erwähnte Maß G "Stegeintauchtiefe" kennzeichnet ein auf das Maß H bezogenes Mindestmaß zur Gewährleistung einer Verrastfunktion der Rastelemente 18, 19.

Das oben erwähnte Maß H "Lippenlänge" entspricht einer senkrecht zu der Relativbewegungsebene 16 - und in dem unverformten Ruhezustand - gemessenen Länge der Rastelemente 18 und 19.

Das oben erwähnte Maß I "Länge der Stegverjüngung für Lippenauflage" entspricht einer parallel zu der Relativbewegungsebene 16 gemessenen Differenz zwischen den Maßen M und K.

Das oben erwähnte Maß K "Lippenabstand zu Auflagefläche" entspricht einer parallel zu der Relativbewegungsebene 16 - und in dem unverformten Ruhezustand - gemessenen Abstand eines Rastelements 18, 19 zu einer jeweils benachbarten Anschlagfläche 30, 31.

Das oben erwähnte Maß L "Nutbreite" entspricht einer senkrecht zu der Relativbewegungsebene 16 gemessenen Stegaufnahmenbreite (Abstand zwischen den Begrenzungsflächen 32 und 33 der Stegaufnahme 24).

Das oben erwähnte Maß M "Gesamtlänge der Stegverjüngung" entspricht einer parallel zu der Relativbewegungsebene 16 gemessenen Höhe der Stegbasis 45 des Stegs 22.

Insbesondere folgende Verhältnisse zwischen einzelnen Abmessungen sind vorteilhaft für die Montage (d.h. das Einrasten oder Fügen der Bauteile 12 und 14) bzw. für die Demontage (d.h. das Ausrasten oder Trennen der Bauteile 12 und 14) :

$$\text{Einrastfunktion:} \quad \frac{A-C}{2\,D} \geq 1$$

$$\text{Einrastfunktion:} \quad \frac{I}{H} \geq 1$$

$$\text{Einrastfunktion:} \quad \frac{G}{H} \geq 1$$

$$\text{Ausrastfunktion:} \quad \frac{A-B}{2\,D} \leq 1$$

$$\text{Ausrastfunktion:} \quad \frac{K}{H} < 1$$

$$\text{Ein.- + Ausrastfunktion:} \quad L \geq C + 2H$$

Die Bedingung F/A > 1 liefert dabei die Grundvoraussetzung für eine Verrastbarkeit der Bauteile 12, 14.

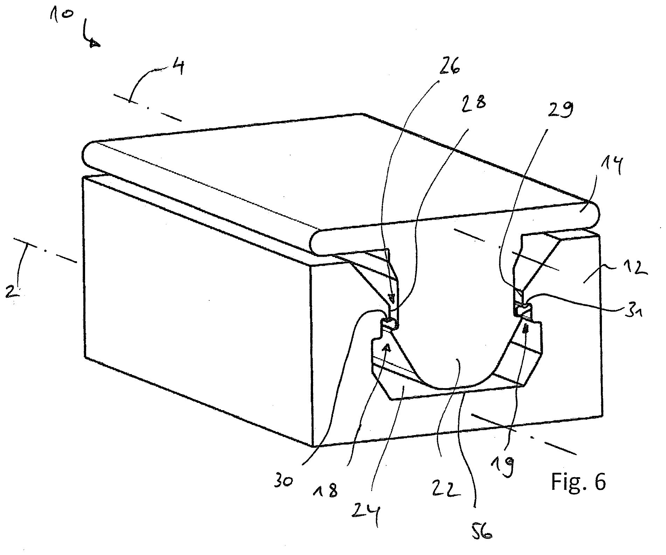

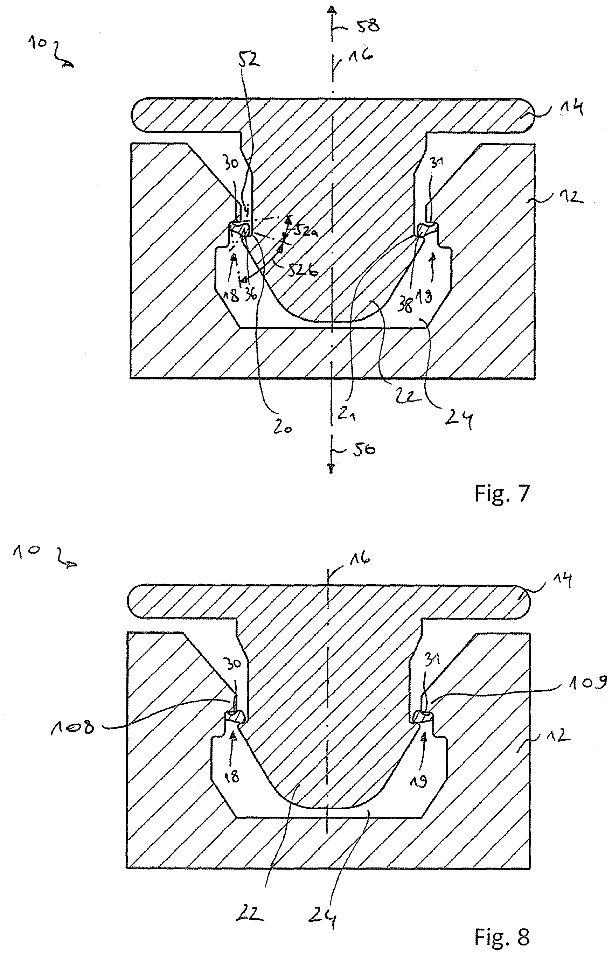

Eine in den Figuren 6 bis 8 dargestellte dritte Ausführungsform einer Verbindungsanordnung 10 unterscheidet sich dadurch von den vorstehend beschriebenen Ausführungsformen, dass das erste Bauteil 12 eine Stegaufnahme 24 aufweist, während das zweite Bauteil 14 einen Steg 22 aufweist. Die Rastelemente 18, 19 sind benachbart zu dem Eingang 26 an der Stegaufnahme 24 angeordnet sind. Die Anschlagflächen 30, 31 sind jeweils durch die Materialvorsprünge 108, 109 des ersten Bauteils 12 gebildet. Die Rastelementaufnahmen 20, 21 sind an dem Steg 22 angeordnet.

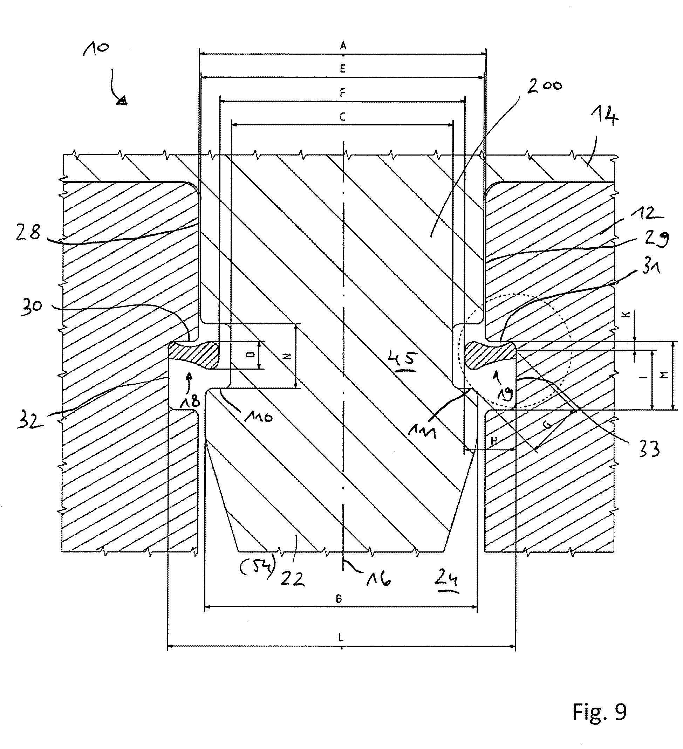

Die aus den Erläuterungen zur Figur 5 gewonnenen Erkenntnisse hinsichtlich der Dimensionierungsvorschriften sind auf die in den Figuren 6 bis 8 vorherrschenden Gegebenheiten sinngemäß zu übertragen. Beispielsweise gilt für das Ausführungsbeispiel der Figuren 6 bis 8 die Bedingung F/B < 1 als Grundvoraussetzung für eine Verrastbarkeit der Bauteile 12, 14, vgl. auch Fig. 9.

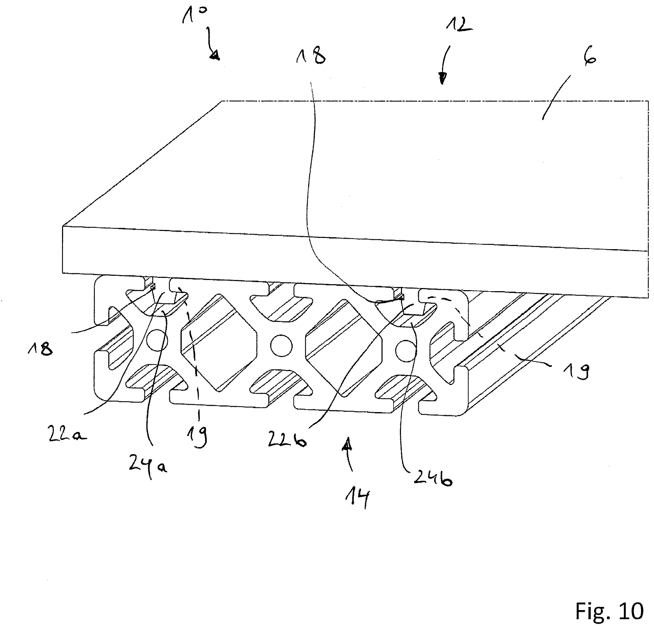

Eine in Figur 10 dargestellte weitere Ausführungsform einer Verbindungsanordnung 10 umfasst ein erstes Bauteil 12 in Form eines plattenförmigen Flachkörpers 6. Der Flachkörper 6 ist beispielsweise als Bodenplatte ausgebildet.

Vorzugsweise weist der Flachkörper 6 eine Mehrzahl von Stegen 22a, 22b auf, welche relativ zueinander versetzt angeordnet sind und jeweils Rastelemente 18, 19 aufweisen, für deren Aufbau und Funktionsweise insbesondere auf die vorstehende Beschreibung zu den Figuren 1 bis 5 Bezug genommen wird.

Das zweite Bauteil 14 weist eine Mehrzahl von relativ zueinander versetzt angeordneten Stegaufnahmen 24a, 24b auf, welche jeweils zur Anordnung eines der Stege 22a, 22b dienen.

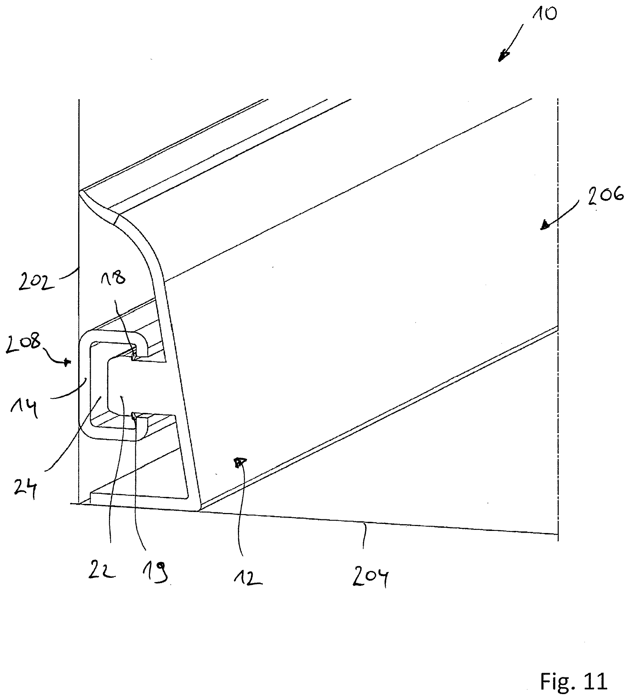

Eine in Figur 11 dargestellte Verbindungsanordnung 10 eignet sich insbesondere für die Verwendung in einem Einbaubereich zwischen einer Wand 202 und einem Boden 204. Ein erstes Bauteil 12 der Verbindungsanordnung 10 ist als Sockelleiste 206 ausgebildet. Dieses Bauteil weist einen Steg 22 mit Rastelementen 18, 19 auf. Ein zweites Bauteil 14 ist als mit der Wand 202 verbundene Montageleiste 208 ausgebildet. Diese umschließt eine Stegaufnahme 24.

Zur Montage der Sockelleiste 206 wird diese parallel zu der Erstreckungsebene des Bodens 204 in Richtung auf die Wand 202 gedrückt, sodass die Rastelemente 18 und 19 in mit der Montageleiste 208 verrasten (vergleiche insbesondere vorstehende Beschreibung zu den Figuren 1 bis 5).

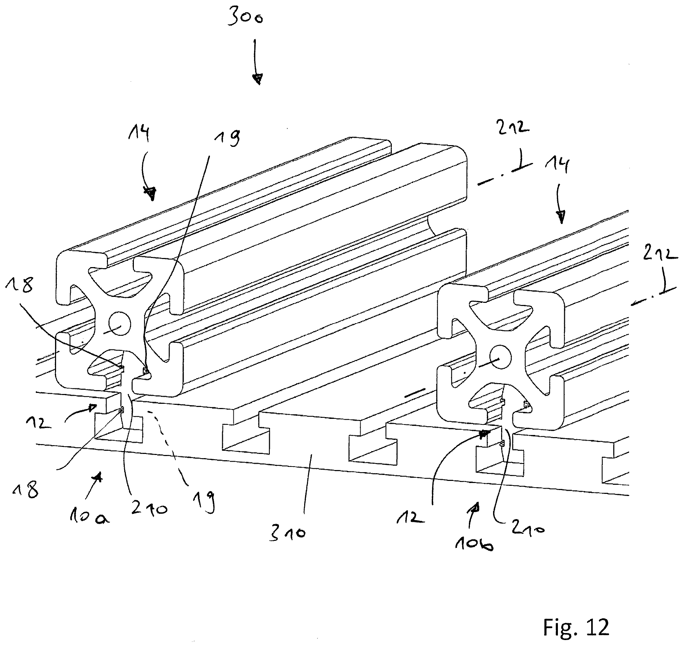

In Figur 12 ist ein Verbindungssystem 300 dargestellt, welches eine Mehrzahl von Verbindungsanordnungen 10 (in Figur 12 mit 10a und 10b bezeichnet) umfasst. Die jeweils ersten Bauteile 12 der Verbindungsanordnungen 10a, 10b sind als Doppelstegleiste 210 mit jeweils zwei Paaren von Rastelementen 18 und 19 ausgebildet, welche einenends mit jeweils zweiten Bauteilen 14 der Verbindungsanordnungen 10a, 10b verrastet sind und anderenends mit einer Verbundplatte 310 (zur Verrastung vergleiche insbesondere vorstehende Beschreibung zu den Figuren 1 bis 5).

Die zweiten Bauteile 14 sind als Konstruktionsprofile ausgebildet, insbesondere als ITEM- oder Bosch-Profile. Die zweiten Bauteile 14 erstrecken sich jeweils entlang zueinander paralleler Längserstreckungsachsen 212.

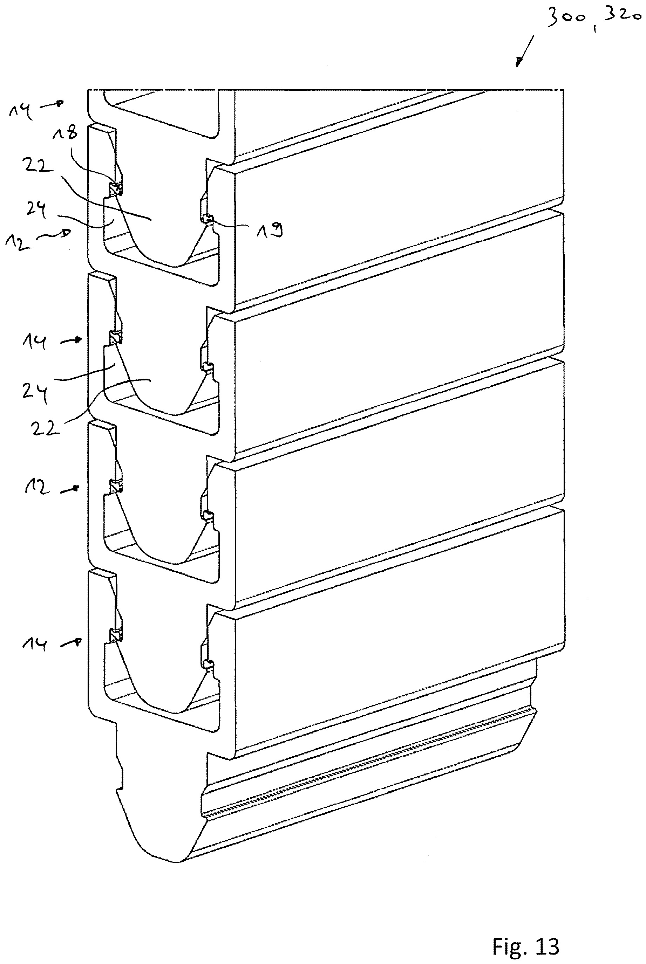

Ein in Figur 13 dargestelltes Verbindungssystem 300 ist als Kettengliederanordnung 320 ausgebildet. Dabei sind vorzugsweise alle Bauteile 12 und 14 zueinander identisch. Dies bedeutet, dass jedes der Bauteile 12, 14 sowohl einen Steg 22 als auch eine Stegaufnahme 24 aufweist, wobei die eigentliche Verrastung mittels der Rastelemente 18 und 19 in der vorstehend unter Bezugnahme auf Figuren 1 bis 5 beschriebenen Art und Weise erfolgt.

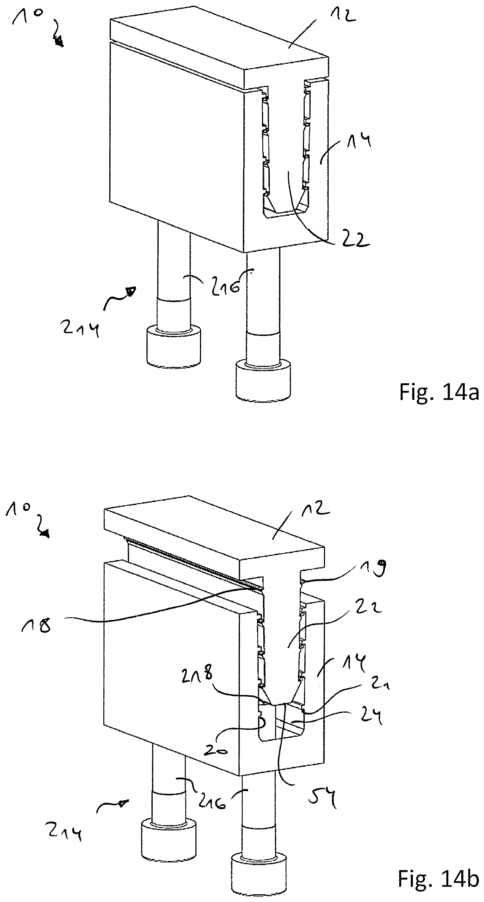

In den Figuren 14a und 14b ist ein Beispiel für eine Verbindungsanordnung 10 gezeigt, welche eine Relativlageneinstelleinrichtung 214 umfasst. Diese umfasst mindestens ein Ausdrückelement 216, das beispielsweise an dem zweiten Bauteil 14 angeordnet und relativ zu diesem Bauteil beweglich ist.

Das mindestens eine Ausdrückelement 216 weist mindestens eine Ausdrückfläche 218 auf, welche in unmittelbarem Kontakt mit einer Oberfläche des anderen Bauteils (hier: des ersten Bauteils 12) steht, um das erste Bauteil 12 relativ zu dem zweiten Bauteil 14 zu bewegen, insbesondere um das erste Bauteil 12 mit seinem Steg 22 aus der Stegaufnahme 24 des zweiten Bauteils 14 herausdrücken zu können. Somit ist die Relativlageneinstelleinrichtung 214 als Demontageeinrichtung wirksam. Dies ist besonders vorteilhaft, wenn ein stabiler Verbund zwischen einem ersten Bauteil 12 und einem zweiten Bauteil 14 dadurch geschaffen wird, dass das erste Bauteil 12 nicht nur ein einziges Paar von Rastelementen 18, 19 aufweist, welche mit einem einzigen Paar von Rastelementaufnahmen 20, 21 des zweiten Bauteils 14 verrastbar sind, sondern wenn entsprechende Mehrzahlen von Rastelementpaaren und Rastelementaufnahmepaaren vorgesehen sind, vergleiche Figuren 14a und 14b (zur Verrastung vergleiche insbesondere vorstehende Beschreibung zu den Figuren 1 bis 5).

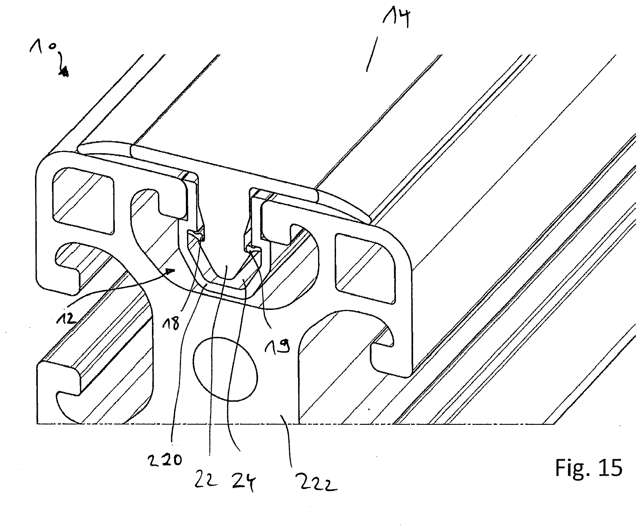

Eine in Figur 15 dargestellte Ausführungsform einer Verbindungsanordnung 10 umfasst ein erstes Bauteil 12, das als adapterförmiges Zwischenteil 220 ausgebildet ist. Dieses ist im Wesentlichen U-förmig und begrenzt eine Stegaufnahme 24 für einen Steg 22 eines zweiten Bauteils 14. Das adapterförmige Zwischenteil 220 wiederum ist vorzugsweise an einem Zusatzteil 222 aufgenommen, beispielsweise einem Konstruktionsprofil, insbesondere einem ITEM-Profil oder einem Bosch-Profil.

Bei dem in Figur 15 dargestellten Ausführungsbeispiel trägt das adapterförmige Zwischenteil 220 die Rastelemente 18 und 19, sodass das adapterförmige Zwischenteil 220 dem ersten Bauteil 12 der Verbindungsanordnung 10 entspricht. Diese Anordnung entspricht dem Ausführungsbeispiel gemäß Figuren 6 bis 8; es ist aber auch denkbar, dass die Konfiguration von Rastelementen 18, 19 und Rastelementaufnahmen 20, 21 der Ausführungsbeispiele gemäß Figuren 1 bis 5 verwendet wird.

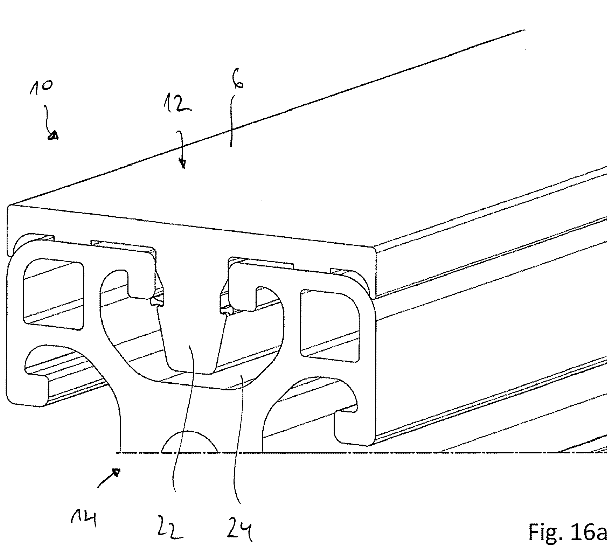

In den Figuren 16a bis 16c dargestellte Ausführungsformen von Verbindungsanordnungen 10 umfassen jeweils ein erstes Bauteil 12 in Form eines plattenförmigen Flachkörpers 6, der eine Längsseite eines zweiten Bauteils 14 in Form eines Konstruktionsprofils, insbesondere eines ITEM- oder Bosch-Profils, überdeckt.

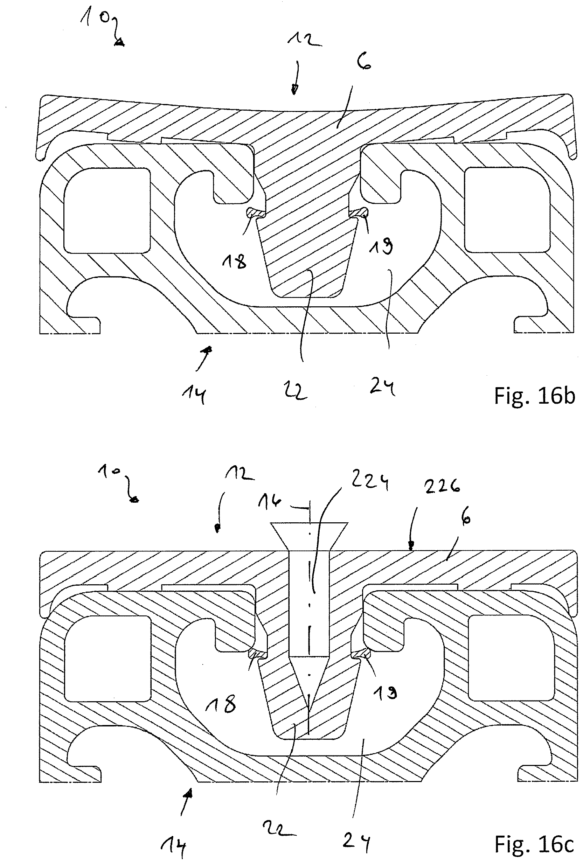

Es ist möglich, dass der Flachkörper 6 aus einem steifen, nicht nachgiebigen Material hergestellt ist, vergleiche Figur 16a, oder aus einem elastisch nachgiebigen Material, vergleiche Figur 16b.

Beispielsweise kann der Flachkörper 6 aus einem Elastomermaterial hergestellt sein. Für eine Demontage eines solchen Flachkörpers 6 kann es genügen, diesen im Bereich eines Stegs 22 tiefer in eine Stegaufnahme 24 des zweiten Bauteils 14 einzudrücken, sodass die Rastelemente 18, 19 freigegeben werden. Um Demontagekräfte zu erhöhen, ist es möglich, ein zwischen den Rastelementen 18 und 19 wirksames Stift- oder Keilelement 224 zu verwenden. Dieses kann (auch nachträglich) von einer dem zweiten Bauteil 14 abgewandten Außenseite 226 des ersten Bauteils 12 eingebracht werden. Im montierten Zustand stabilisiert das Stift- oder Keilelement 224 einen senkrecht zu der Relativbewegungsebene 16 gemessenen Abstand zwischen den Rastelementen 18 und 19, vergleiche Figur 16c. Zum Aufbau und zur Funktionsweise der Verrastung vergleiche insbesondere vorstehende Beschreibung zu den Figuren 1 bis 5.

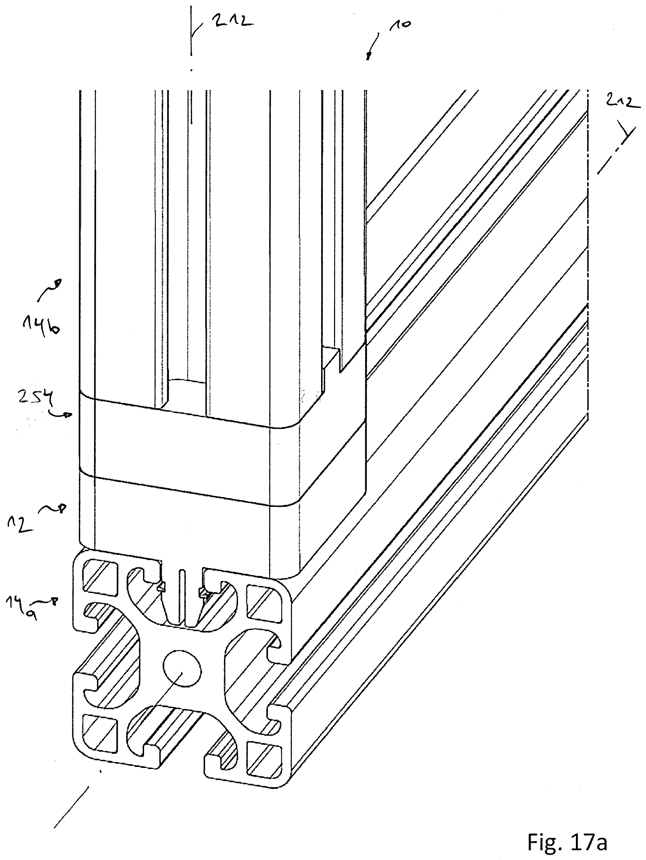

Ein in den Figuren 17a bis 17c dargestelltes Ausführungsbeispiel einer Verbindungsanordnung umfasst zwei zweite Bauteile 14a und 14b in Form von Konstruktionsprofilen. Diese erstrecken sich jeweils entlang von relativ zueinander senkrechten Längserstreckungsachsen 212.

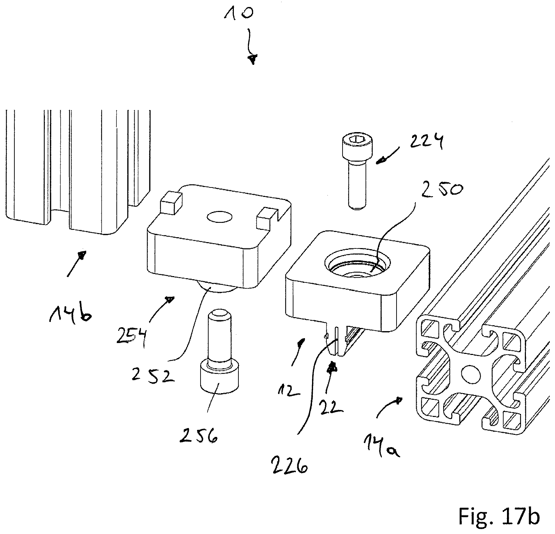

Ein in Figur 17b mit 22 bezeichneter Steg eines ersten Bauteils 12 weist einen Längsspalt 226 auf, der eine vereinfachte Montierbarkeit des ersten Bauteils 12 an dem zweiten Bauteil 14a ermöglicht. Zum Aufbau und zur Funktionsweise der Verrastung vergleiche insbesondere vorstehende Beschreibung zu den Figuren 1 bis 5.

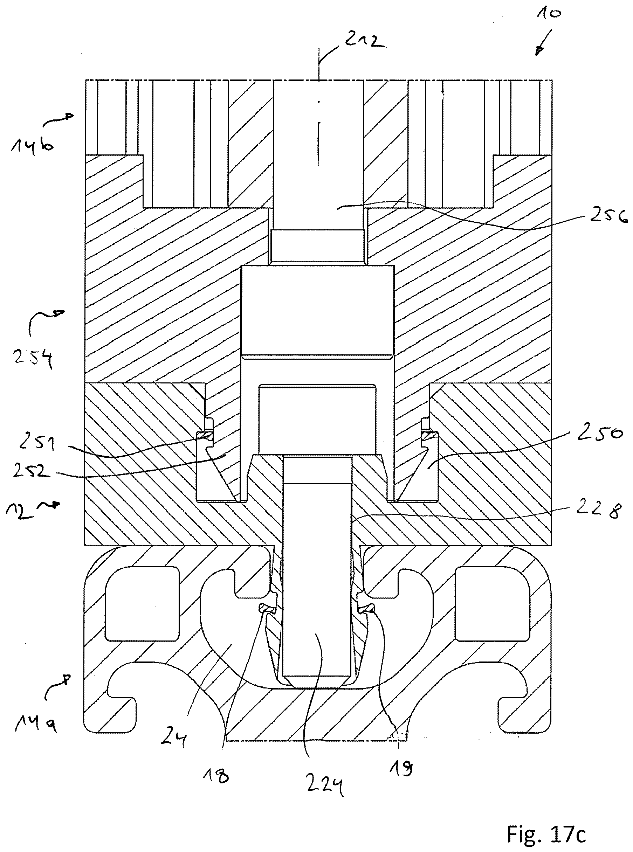

Zur Verbesserung der Stabilität des Montagezustands, vergleiche Figur 17c, kann ein beispielsweise als Schraube ausgebildetes Stift- oder Keilelement 224 verwendet werden, das mit einer Schraubenaufnahme 228 des ersten Bauteils 12 verschraubbar ist.

Zur Verbindung des ersten Bauteils 12 mit dem zweiten Bauteil 14b weist das erste Bauteil 12 eine dem zweiten Bauteil 14a abgewandte, ringförmige Rastaufnahme 250 mit einer ringförmigen Rastlippe 251 auf. Diese verrastet mit einem Rastkopf 252 eines Zwischenteils 254, das mittels einer Schraube 256 mit einem Stirnbereich des zweiten Bauteils 14b verbunden ist.

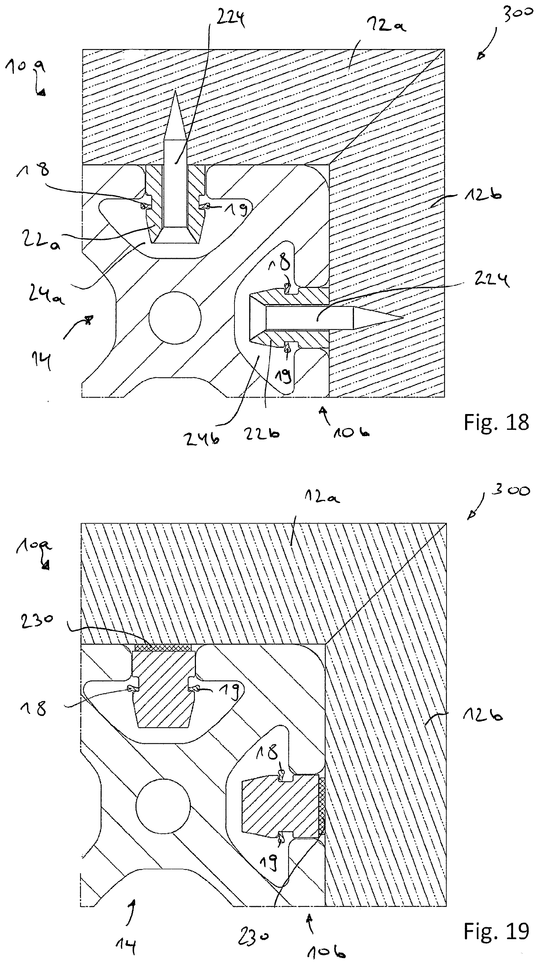

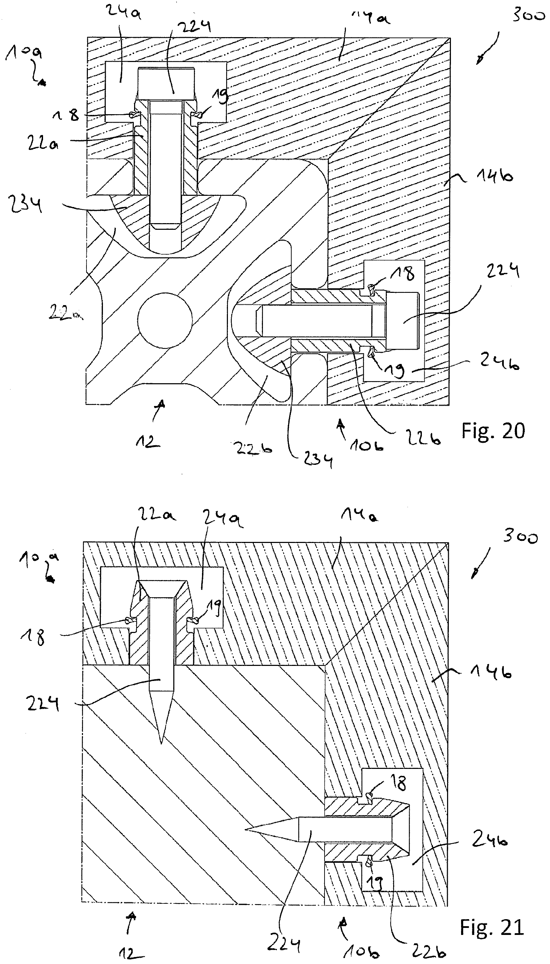

Figuren 18 bis 21 zeigen verschiedene Verbindungssysteme 300 mit mindestens zwei Verbindungsanordnungen 10a, 10b. Jeweils eines der Bauteile 12, 14 ist beiden Verbindungsanordnungen 10a und 10b zugeordnet. Für das Beispiel der Figuren 18 und 19 ist dies das zweite Bauteil 14. Für das Beispiel der Figuren 20 und 21 ist dies das erste Bauteil 12.

Die in den Figuren 18 bis 21 dargestellten Anordnungen eignen sich insbesondere für Eckverbindungen "auf Stoß", beispielsweise für zwei erste Bauteile 12a, 12b (vergleiche Figuren 18 und 19) oder für zwei zweite Bauteile 14a und 14b (vergleiche Figuren 20 und 21). Das jeweils für zwei Verbindungsanordnungen 10a, 10b gemeinsam genutzte Bauteil ist vorzugsweise in Form eines Konstruktionsprofils ausgebildet, welches vorzugsweise in 90° zueinander versetzt angeordneten Richtungen offene Stegaufnahmen 24a, 24b aufweist, vergleiche Figuren 18 und 19. Zur Fixierung der Stege 22a, 22b an den ersten Bauteilen 12a, 12b können in vorstehend beschriebener Art und Weise Stift- oder Keilelemente 224 verwendet werden, vgl. Figur 18, oder beispielsweise auch Klebeverbindungen 230, vergleiche Figur 19.

Für den Fall, dass die "auf Stoß" angeordneten zweiten Bauteile 14a, 14b, vergleiche Figuren 20 und 21, Stegaufnahmen 24a, 24b aufweisen, können die Stege 22a, 22b mit Stift- oder Keilelementen 224 an dem ersten Bauteil 12 fixiert werden, insbesondere wenn dieses als massives Profil, insbesondere als Holzprofil ausgebildet ist, vergleiche Figur 21.

Für den Fall der Ausbildung des ersten Bauteils 12 in Form eines Konstruktionsprofils ist es möglich, die Stegaufnahmen 22a, 22b eines solchen Profils zur Anordnung von Befestigungselementen 234 zu nutzen, um Stege 22a, 22b, welche Rastelemente 18, 19 tragen, zu fixieren, vorzugsweise mittels eines Stift- oder Keilelements 224, vgl. Fig. 21.

Zum Aufbau und zur Funktionsweise der Verrastung der Rastelemente 18, 19 der Ausführungsbeispiele gemäß Fig. 18 bis 21 vergleiche insbesondere vorstehende Beschreibung zu den Figuren 1 bis 5.

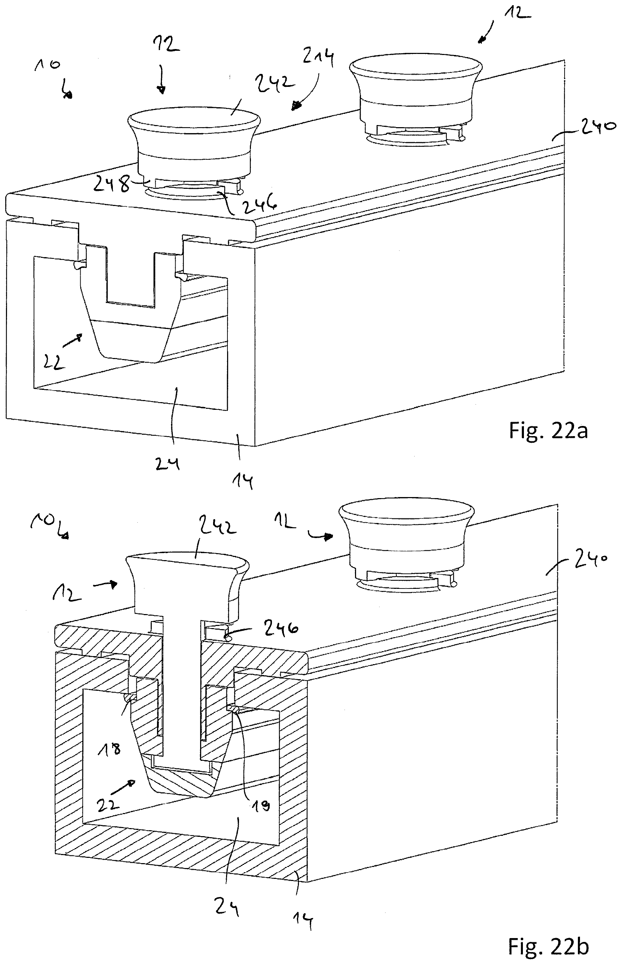

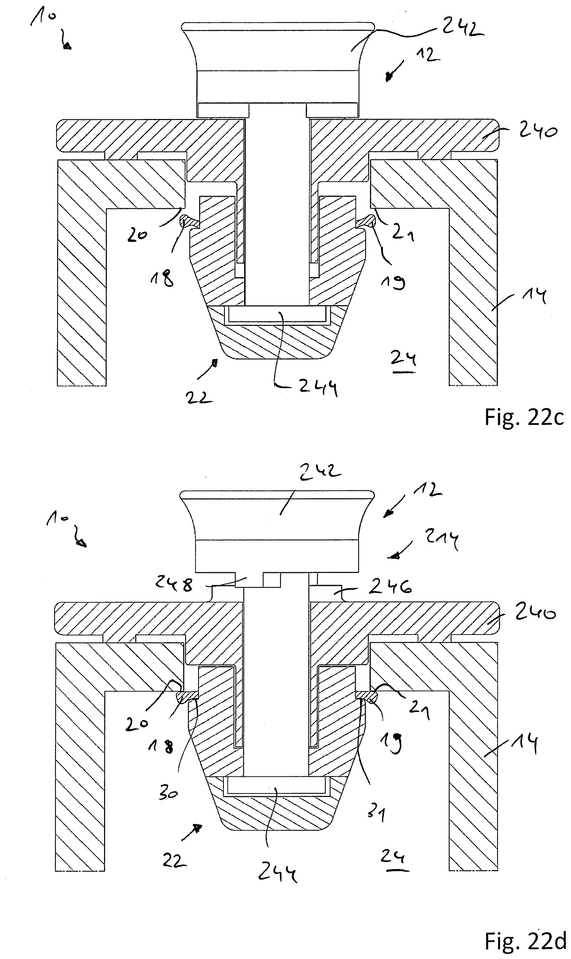

Bei einer in Figuren 22a bis 22d dargestellten Verbindungsanordnung 10 ist mindestens ein erstes Bauteil 12 vorgesehen, das relativ zueinander bewegbare Abschnitte aufweist. Ein erster Abschnitt ist durch den Steg 22 gebildet, der Rastelemente 18 und 19 trägt. Ferner ist ein Zwischenabschnitt 240 vorgesehen, welcher das zweite Bauteil 14 und dessen Stegaufnahme 24 überdeckt. Schließlich ist ein Betätigungsabschnitt 242 vorgesehen, der den Zwischenabschnitt 240 durchsetzt und der einen Mitnehmer 244 aufweist, der relativ zu dem Steg 22 verdrehbar ist.

Der Zwischenabschnitt 240 weist auf seiner dem zweiten Bauteil 14 abgewandten Außenseite Distanzelemente 246 auf. Diese wirken mit Spielausgleichselementen 248 des Betätigungsabschnitts 242 zusammen. Die Verbindungsanordnung 10 gemäß den Figuren 22a bis 22d verfügt damit über eine die Elemente 242, 246 und 248 umfassende Relativlageneinstelleinrichtung 214.

Zur Montage des ersten Bauteils 12 und des zweiten Bauteils 14 wird der Steg 22 des ersten Bauteils 12 in die Stegaufnahme 24 eingeführt. Wenn dabei eine Drehlage des Betätigungsabschnitts 242 so gewählt ist, dass die Spielausgleichselemente 248 und die Distanzelemente 246 in Drehrichtung gesehen relativ zueinander versetzt angeordnet sind, vergleiche Figur 22c, kann der Steg 22 so tief in die Stegaufnahme 24 eingeführt werden, dass die Rastelemente 18, 19 zu den Rastelementaufnahmen 20, 21 des zweiten Bauteils 14 beabstandet sind.

In einem sich anschließenden Spielausgleichsschritt kann der Betätigungsabschnitt 242 angehoben und verdreht werden, sodass die Spielausgleichselemente 248 so zu den Distanzelementen 246 positioniert werden, dass diese aufeinander aufliegen. In dieser Position hält der Mitnehmer 244 des Betätigungsabschnitts 242 den Steg 22 in einer Position, in welcher die Rastelemente 18, 19 in Kontakt mit den Rastelementaufnahme 22, 21 des zweiten Bauteils 14 stehen.

**Patentansprüche**

1. Verbindungsanordnung (10), mit einem ersten Bauteil (12) in Form eines Langkörpers, wobei sich das erste Bauteil (12) entlang einer Längserstreckungssachse (2) erstreckt, und einem zweiten Bauteil (14) in Form eines Langkörpers, wobei sich das zweite Bauteil (14) entlang einer Längserstreckungssachse (4) erstreckt, wobei das erste Bauteil (12) und das zweite Bauteil (14) ausgehend von einem voneinander getrennten Demontagezustand entlang einer zu jeweiligen Erstreckungsebenen der Bauteile (12, 14) parallelen Relativbewegungsebene (16) miteinander fügbar, in einen miteinander verbundenen Montagezustand und wieder in den Demontagezustand überführbar sind, wobei an dem ersten Bauteil (12) beidseits der Relativbewegungsebene jeweils mindestens ein Rastelement (18, 19) angeordnet ist und wobei an dem zweiten Bauteil (14) zwei Rastelementaufnahmen (20, 21) angeordnet sind, welche in dem Montagezustand jeweils mit einem Rastbereich (36, 38) eines der beiden Rastelemente (18, 19) zusammenwirken, wobei jeweils ein Rastbereich (36, 38) eines Rastelements (18, 19) ausgehend von einem unverformten Ruhezustand entlang eines Bewegungswegs (52) bewegbar ist, der zumindest eine zu der Relativbewegungsebene (16) parallele Komponente aufweist, wobei ein erster Teil (52a) des Bewegungswegs (52) bezogen auf den Ruhezustand in eine Demontagerichtung (58) weist und wobei ein zweiter Teil (52b) des Bewegungswegs (52) bezogen auf den Ruhezustand in eine der Demontagerichtung (58) entgegengesetzte Montagerichtung (50) weist, wobei der erste Teil des Bewegungswegs (52a) durch Anschlagflächen (30, 31) begrenzt ist, an welchen sich die Rastelemente (18, 19) im Zuge der Demontage der Bauteile (12, 14) jeweils abstützen, **dadurch gekennzeichnet, dass** das erste Bauteil (12) einen sich parallel zu der Längserstreckungsachse (2) erstreckenden Steg (22) aufweist und dass das zweite Bauteil (14) eine sich parallel zu der Längserstreckungsachse (4) erstreckende Stegaufnahme (24) aufweist.

2. Verbindungsanordnung (10) nach Anspruch 1, **dadurch gekennzeichnet, dass** sich der Steg (22) in einem Querschnitt des ersten Bauteils (12) ausgehend von einem freien Ende (54) bis hin zu zwei Materialvorsprüngen (46) erstreckt, an welche sich jeweils nach innen versetzte Seitenflächen (44) einer Stegbasis (45) anschließen, wobei im Bereich jeweils eines Übergangs zwischen jeweils einem Materialvorsprung (46) und der Stegbasis (45) jeweils eines der Rastelemente (18, 19) angeordnet ist.

3. Verbindungsanordnung (10) nach einem der voranstehenden Ansprüche, **dadurch gekennzeichnet, dass** die Rastelemente (18, 19) der Verbindungsanordnung (10) zu der Relativbewegungsebene (16) schnittpunktfrei ausgerichtet sind und/oder dass die Rastelemente (18, 19) jeweils ausschließlich auf einer der beiden Seiten der Relativbewegungsebene (16) angeordnet sind und/oder dass die Verbindungsanordnung (10) kein Rastelement aufweist, das sich durch die Relativbewegungsebene (16) hindurch erstreckt.

4. Verbindungsanordnung (10) nach einem der voranstehenden Ansprüche, **dadurch gekennzeichnet, dass** sich die Anschlagflächen (30, 31) jeweils quer zu der Relativbewegungsebene (16) erstrecken.

5. Verbindungsanordnung (10) nach einem der voranstehenden Ansprüche, **dadurch gekennzeichnet, dass** zumindest eines der Bauteile (12, 14) ein Konstruktionsprofil ist.

6. Verbindungsanordnung (10) nach einem der voranstehenden Ansprüche, **dadurch gekennzeichnet, dass** die Stegaufnahme (24) des zweiten Bauteils (14) nutförmig ist und eine senkrecht zur Relativbewegungsebene (16) gemessene Stegaufnahmenbreite (L) aufweist, wobei die Stegaufnahme (24) durch einen Eingang (26) mit einer senkrecht zur Relativbewegungsebene (16) gemessenen Eingangsbreite (A) zugänglich ist für ein freies oder das freie Ende (54) des Stegs (22) des ersten Bauteils (12), wobei das freie Ende (54) eine senkrecht zur Relativbewegungsebene (16) gemessene, maximale Kopfbreite (B) aufweist, wobei das freie Ende (54) benachbart zu einer querschnittsverjüngten Stegbasis (45) angeordnet ist, die eine senkrecht zur Relativbewegungsebene (16) gemessene Breite (C) aufweist, wobei die Rastbereiche (36, 38) der Rastelemente (18, 19) jeweils eine parallel zu der Relativbewegungsebene (16) gemessene Dicke (D) aufweisen.

7. Verbindungsanordnung (10) nach Anspruch 6, **dadurch gekennzeichnet, dass** das 2-fache der Dicke (D) mindestens gleich der Differenz aus der Eingangsbreite (A) und der Kopfbreite (B) ist.

8. Verbindungsanordnung (10) nach Anspruch 6 oder 7, **dadurch gekennzeichnet, dass** das 2-fache der Dicke (D) höchstens gleich der Differenz aus der Eingangsbreite (A) und der Basisbreite (C) ist und/oder dass das 2-fache der Dicke (D) höchstens gleich der Differenz aus der Stegaufnahmenbreite (L) und der Kopfbreite (B) ist.

9. Verbindungsanordnung (10) nach einem der voranstehenden Ansprüche, **dadurch gekennzeichnet, dass** zumindest eines der Bauteile (12, 14) ein insbesondere plattenförmiger Flachkörper (6) oder eine Sockelleiste (206) ist oder durch eine Doppelstegleiste (210) oder durch ein adapterförmiges Zwischenteil (220) gebildet ist, oder dass beide Bauteile (12, 14) Kettenglieder einer Kettengliederanordnung (320) bilden.

10. Verbindungsanordnung (10) nach einem der voranstehenden Ansprüche, **dadurch gekennzeichnet, dass** eine Relativlageneinstelleinrichtung (214) vorgesehen ist, welche mit dem ersten Bauteil (12) oder mit dem zweiten Bauteil (14) zumindest mittelbar verbunden ist, wobei mittels der Relativlageneinstelleinrichtung (214) in dem Montagezustand der Verbindungsanordnung (10) die Relativlage zumindest eines Teils des ersten Bauteils (12) und zumindest eines Teils des zweiten Bauteils (14) längs einer zu der Relativbewegungsebene (16) parallelen Montage- und Demontageachse einstellbar ist.

11. Verbindungsanordnung (10) nach Anspruch 10, **dadurch gekennzeichnet, dass** die Relativlageneinstelleinrichtung (214) als Demontageeinrichtung wirksam ist, mittels welcher die Verbindungsanordnung (10) aus dem Montagezustand in den Demontagezustand überführbar ist.

12. Verbindungsanordnung (10) nach Anspruch 10 oder 11, **dadurch gekennzeichnet, dass** die Relativlageneinstelleinrichtung (214) als Spielausgleichseinrichtung wirksam ist, mittels welcher ein Montagespiel zwischen jeweils einem Rastelement (18, 19) und jeweils einer Rastelementaufnahme (20, 21) ausgleichbar ist.

13. Verbindungsanordnung (10) nach einem der voranstehenden Ansprüche, **dadurch gekennzeichnet, dass** zur Einstellung eines Abstands zwischen den Rastelementen (18, 19) ein zwischen den Rastelementen (18 und 19) wirksames Stiftoder Keilelement (224) angeordnet ist.

14. Verbindungsanordnung (10) nach einem der voranstehenden Ansprüche, **dadurch gekennzeichnet, dass** sie mindestens zwei als Langkörper ausgebildete zweite Bauteile (14, 14a, 14b) umfasst, deren Längserstreckungsachsen (212) zueinander senkrecht, parallel oder kollinear sind.

15. Verbindungssystem (300), umfassend mindestens zwei Verbindungsanordnungen (10a, 10b) nach einem der Ansprüche 1 bis 14, wobei vorzugsweise ein erstes Bauteil (12) oder ein zweites Bauteil (14) beiden Verbindungsanordnungen (10) gleichzeitig zugeordnet ist.

## Claims

1. Connection assembly (10) with a first component (12) in the form of an elongate body, wherein the first component (12) extends along a longitudinal extent axis (2), and with a second component (14) in the form of an elongate body, wherein the second component (14) extends along a longitudinal extent axis (4);

   wherein the first component (12) and the second component (14), starting from a mutually separated dismantled state, can be joined together along a relative movement plane (16) parallel to the respective extent planes of the components (12, 14) into an interconnected mounting state and transferred back again into the dismantled state; wherein at least one latching element (18, 19) is arranged on the first component (12) on each side of the relative movement plane, and wherein two latching element receivers (20, 21) are arranged on the second component (14) which, in mounted state, each cooperate with a latching region (36, 38) of one of the two latching elements (18, 19);
   wherein a respective latching region (36, 38) of a latching element (18, 19) can be moved, starting from an undeformed rest state, along a movement path (52) which has at least one component parallel to the relative movement plane (16);
   wherein a first part (52a) of the movement path (52) points in the dismantling direction (58) relative to the rest state, and wherein a second part (52b) of the movement path (52) points in a mounting direction (50) opposite the dismantling direction (58) relative to the rest state;
   wherein the first part of the movement path (52a) is delimited by stop faces (30, 31) on which the latching elements (18, 19) each rest during the dismantling of the components (12, 14),

   **characterised in that** the first component (12) has a web (22) extending parallel to the longitudinal extent axis (2) and that the second component (14) has a web receiver (24) extending parallel to the longitudinal extent axis (4).

2. Connection assembly (10) according to claim 1, **characterised in that** in a cross-section of the first component (12), the web (22) extends starting from a free end (54) as far as two material protrusions (46), each of which is adjoined by an inwardly offset side face (44) of a web base (45), wherein a respective one of the latching elements (18, 19) is arranged in the region of each transition between a respective material protrusion (46) and the web base (45).

3. Connection assembly (10) according to one of the preceding claims, **characterised in that** the latching elements (18, 19) of the connection assembly (10) are aligned without intersection point with the relative movement plane (16), and/or that the latching elements (18, 19) are each arranged exclusively on one of the two sides of the relative movement plane (16), and/or that the connection assembly (10) has no latching element which extends through the relative movement plane (16).

4. Connection assembly (10) according to any of the preceding claims, **characterised in that** the stop faces (30, 31) each extend transversely to the relative movement plane (16).

5. Connection assembly (10) according to any of the preceding claims, **characterised in that** at least one of the components (12, 14) is a construction profile.

6. Connection assembly (10) according to any of the preceding claims, **characterised in that** the web receiver (24) of the second component (14) is groove-like and has a web receiver width (L) measured perpendicularly to the relative movement plane (16); wherein the web receiver (24) is accessible for a or the free end (54) of the web (22) of the first component (12), through an inlet (26) with an inlet width (A) measured perpendicularly to the relative movement plane (16);

   wherein the free end (54) has a maximum head width (B) measured perpendicularly to the relative movement plane (16);
   wherein the free end (54) is arranged adjacent to a web base (45) which has a tapering cross-section and a width (C) measured perpendicularly to the relative movement plane (16);
   wherein the latching regions (36, 38) of the latching elements (18, 19) each have a thickness (D) measured parallel to the relative movement plane (16).

7. Connection assembly (10) according to claim 6, **characterised in that** two times the thickness (D) is at least equal to the difference between the inlet width (A) and the head width (B).

8. Connection assembly (10) according to claim 6 or 7, **characterised in that** two times the thickness (D) is at most equal to the difference between the inlet width (A) and the base width (C), and/or that two times the thickness (D) is at most equal to the difference between the web receiver width (L) and the head width (B).

9. Connection assembly (10) according to any of the preceding claims, **characterised in that** at least one of the components (12, 14) is an in particular plate-like flat body (6) or a plinth strip (206), or is formed by a double web strip (210) or by an adapter-like intermediate part (220), or that both components (12, 14) form chain links of a chainlink assembly (320).

10. Connection assembly (10) according to any of the preceding claims, **characterised in that** a relative position adjustment device (214) is provided which is connected at least indirectly to the first component (12) or to the second component (14), wherein by means of the relative position adjustment device (214), in mounted state of the connection assembly (10), the relative position of at least one part of the first component (12) and at least one part of the second component (14) is adjustable along a mounting and dismantling axis parallel to the relative movement plane (16).

11. Connection assembly (10) according to claim 10, **characterised in that** the relative position adjustment device (214) is active as a dismantling device, by means of which the connection assembly (10) can be transferred from the mounted state to the dismantled state.

12. Connection assembly (10) according to claim 10 or 11, **characterised in that** the relative position adjustment device (214) is active as a play compensation device, by means of which a mounting play between a respective latching element (18, 19) and a respective latching element receiver (20, 21) can be compensated.

13. Connection assembly (10) according to any of the preceding claims, **characterised in that** to adjust a distance between the latching elements (18, 19), a pin or wedge element (224) is arranged between the latching elements (18 and 19).

14. Connection assembly (10) according to any of the preceding claims, **characterised in that** it comprises at least two second components (14, 14a, 14b) configured as elongate bodies, the longitudinal extent axes (212) of which are mutually perpendicular, parallel or co-linear.

15. Connection system (300) comprising at least two connection assemblies (10a, 10b) according to any of claims 1 to 14, wherein preferably a first component (12) or a second component (14) is assigned simultaneously to both connection assemblies (10).

**Revendications**

1. Ensemble de raccordement (10), comprenant un premier composant (12) sous la forme d'un corps allongé, dans lequel le premier composant (12) s'étend le long d'un axe d'extension longitudinale (2), et un second composant (14) sous la forme d'un corps allongé, dans lequel le second composant (14) s'étend le long d'un axe d'extension longitudinale (4), dans lequel le premier composant (12) et le second composant (14), à partir d'un état démonté séparés l'un de l'autre, peuvent être reliés l'un à l'autre le long d'un plan de déplacement relatif (16) parallèle aux plans d'extension respectifs des composants (12, 14), être transférés dans un état monté dans lequel ils sont raccordé l'un à l'autre, et à nouveau dans l'état démonté, dans lequel au moins un élément d'encliquetage (18, 19) est agencé sur le premier composant (12) de part et d'autre du plan de déplacement relatif et dans lequel deux logements d'élément d'encliquetage (20, 21) sont agencés sur le second composant (14) qui, dans l'état assemblé, coopèrent chacun avec une zone d'encliquetage (36, 38) de l'un des deux éléments d'encliquetage (18, 19), dans lequel une zone d'encliquetage (36, 38) d'un élément d'encliquetage (18, 19) peut être déplacée, à partir d'un état de repos non déformé, le long d'un trajet de déplacement (52) qui présente au moins une composante parallèle au plan de déplacement relatif (16), dans lequel une première partie (52a) du trajet de déplacement (52) montre une direction de démontage (58) par rapport à l'état de repos, et dans lequel une seconde partie (52b) du trajet de déplacement (52) montre une direction de montage (50) opposée à la direction de démontage (58) par rapport à l'état de repos, dans lequel la première partie du trajet de déplacement (52a) est délimitée par des surfaces de butée (30, 31) sur lesquelles les éléments d'encliquetage (18, 19) prennent appui respectivement au cours du démontage des composants (12, 14), **caractérisé en ce que** le premier composant (12) présente une traverse (22) s'étendant parallèlement à l'axe d'extension longitudinale (2), et **en ce que** le second composant (14) présente un logement de traverse (24) s'étendant parallèlement à l'axe d'extension longitudinale (4).

2. Ensemble de raccordement (10) selon la revendication 1, **caractérisé en ce que** la traverse (22) s'étend, dans une section transversale du premier composant (12), à partir d'une extrémité libre (54), jusqu'à deux saillies de matériau (46), au niveau desquelles des surfaces latérales décalées vers l'intérieur (44) respectives d'un fond de traverse (45) se rejoignent, dans lequel l'un des éléments d'encliquetage (18, 19) est agencé respectivement dans la zone d'une transition entre chaque saillie de matériau (46) et le fond de traverse (45).

3. Ensemble de raccordement (10) selon l'une quelconque des revendications précédentes, **caractérisé en ce que** les éléments d'encliquetage (18, 19) de l'ensemble de raccordement (10) sont orientés par rapport au plan de déplacement relatif (16) sans aucune intersection et/ou **en ce que** les éléments d'encliquetage (18, 19) sont agencés respectivement exclusivement sur l'un des deux côtés du plan de déplacement relatif (16) et/ou **en ce que** l'ensemble de raccordement (10) ne présente aucun élément d'encliquetage qui s'étend à travers le plan de déplacement relatif (16).

4. Ensemble de raccordement (10) selon l'une quelconque des revendications précédentes, **caractérisé en ce que** les surfaces de butée (30, 31) s'étendent respectivement transversalement au plan de déplacement relatif (16).

5. Ensemble de raccordement (10) selon l'une quelconque des revendications précédentes, **caractérisé en ce qu'**au moins l'un des composants (12, 14) est un profilé de construction.

6. Ensemble de raccordement (10) selon l'une quelconque des revendications précédentes, **caractérisé en ce que** le logement de traverse (24) du second composant (14) est en forme de rainure et présente une largeur de logement de traverse (L) mesurée perpendiculairement au plan de déplacement relatif (16), dans lequel le logement de traverse (24) est accessible par une entrée (26) comprenant une largeur d'entrée (A) mesurée perpendiculairement au plan de déplacement relatif (16) pour une extrémité libre ou l'extrémité libre (54) de la traverse (22) du premier composant (12), dans lequel l'extrémité libre (54) présente une largeur de tête maximale (B) mesurée perpendiculairement au plan de déplacement relatif (16), dans lequel l'extrémité libre (54) est agencée au voisinage d'un fond de traverse (45) de section transversale effilée, qui présente une largeur (C) mesurée perpendiculairement au plan de déplacement relatif (16), dans lequel les zones d'encliquetage (36, 38) des éléments d'encliquetage (18, 19) présentent respectivement une épaisseur (D) mesurée parallèlement au plan de déplacement relatif (16).

7. Ensemble de raccordement (10) selon la revendication 6, **caractérisé en ce que** le double de l'épaisseur (D) est au moins égale à la différence entre la largeur d'entrée (A) et la largeur de tête (B).

8. Ensemble de raccordement (10) selon la revendication 6 ou 7, **caractérisé en ce que** le double de l'épaisseur (D) est au plus égal à la différence entre la largeur d'entrée (A) et la largeur de fond (C), et/ou **en ce que** le double de l'épaisseur (D) est au plus égal à la différence entre la largeur de logement de traverse (L) et la largeur de tête (B).

9. Ensemble de raccordement (10) selon l'une quelconque des revendications précédentes, **caractérisé en ce qu'**au moins l'un des composants (12, 14) est un corps plat (6) en particulier en forme de plaque ou une plinthe (206) ou est formé par une bande à deux branches (210) ou par une pièce intermédiaire (220) en forme d'adaptateur, ou **en ce que** les deux composants (12, 14) forment des maillons de chaîne d'un ensemble de maillons de chaîne (320).

10. Ensemble de raccordement (10) selon l'une quelconque des revendications précédentes, **caractérisé en ce qu'**un dispositif de réglage de position relative (214) est prévu, qui est raccordé au moins indirectement au premier composant (12) ou au second composant (14), dans lequel le dispositif de réglage de position relative (214) permet, dans l'état monté de l'ensemble de raccordement (10), de régler la position relative d'au moins une partie du premier composant (12) et d'au moins une partie du second composant (14) le long d'un axe de montage et de démontage parallèle au plan de déplacement relatif (16).

11. Ensemble de raccordement (10) selon la revendication 10, **caractérisé en ce que** le dispositif de réglage de position relative (214) agit comme un dispositif de démontage, au moyen duquel l'ensemble de raccordement (10) peut être transféré de l'état monté à l'état démonté.

12. Ensemble de raccordement (10) selon la revendication 10 ou 11, **caractérisé en ce que** le dispositif de réglage de position relative (214) agit comme un dispositif de compensation de jeu, au moyen duquel un jeu de montage entre chaque élément d'encliquetage (18, 19) et chaque logement d'élément d'encliquetage (20, 21) peut être compensé.

13. Ensemble de raccordement (10) selon l'une quelconque des revendications précédentes, **caractérisé en ce qu'**un élément de goupille ou en coin (224) agissant entre les éléments d'encliquetage (18 et 19) est agencé pour régler une distance entre les éléments d'encliquetage (18, 19).

14. Ensemble de raccordement (10) selon l'une quelconque des revendications précédentes, **caractérisé en ce qu'**il comprend au moins deux seconds composants (14, 14a, 14b) réalisés sous forme de corps allongés dont les axes d'extension longitudinale (212) sont mutuellement perpendiculaires, parallèles ou colinéaires.

15. Système de raccordement (300) comprenant au moins deux ensembles de raccordement (10a, 10b) selon l'une quelconque des revendications 1 à 14, dans lequel un premier composant (12) ou un second composant (14) est associé simultanément aux deux ensembles de raccordement (10).

Fig. 1

Fig. 2

Fig. 3

10

6

8

12

24

22

14

Fig. 4a

12

14

20

18

30

22

24

19

21

31

Fig. 4b

Fig. 5

Fig. 6

Fig. 7

Fig. 8

Fig. 9

Fig. 10

Fig. 11

Fig. 12

Fig. 13

Fig. 14a

Fig. 14b

Fig. 15

EP 3 870 864 B1

Fig. 16a

28

Fig. 16b

Fig. 16c

Fig. 17a

10

224

250

14b

254

252

256

12

22

226

14a

Fig. 17b

Fig. 17c

Fig. 18

Fig. 19

Fig. 20

Fig. 21

Fig. 22a

Fig. 22b

Fig. 22c

Fig. 22d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3103665 A1